# EUROPEAN PATENT SPECIFICATION

(11) **EP 2 020 174 B1**
(45) Date of publication and mention of the grant of the patent: **29.02.2012**
(21) Application number: 07015319.2
(22) Date of filing: 03.08.2007
(51) Int. Cl.: A01D 43/08, A01D 43/073

(54) **Agricultural working machine**
Landwirtschaftliche Arbeitsmaschine
Machine de travail agricole

(43) Date of publication of application: 04.02.2009
(73) Proprietor: AGROCOM GmbH & Co. Agrarsystem KG, 33719 Bielefeld (DE)
(72) Inventor: Huster, Jochen, 33330 Gütersloh (DE); Möller, Jens, Dr., 33778 Rheda-Wiedenbrück (DE); Diekhans, Norbert, Dr., 33335 Gütersloh (DE); Autermann, Ludger, 48317 Drensteinfurt (DE); Nienaber, Gerhard, 59302 Oelde (DE); Hieronymus, Peter, 33758 Schloß-Holte Stukenbrock (DE); Wilken, Andreas, 49143 Bissendorf (DE); Pein, Christoph, 25462 Reilingen (DE); Reckersmann, Michael, 47346 Ostbevern (DE); Kleingräber, Karl-Josef, 48231 Warendorf (DE); Erdmann, Hubert, 33739 Bielefeld (DE); Skjodt, Peter, 3520 Farum (DK); Madsen, Tommy Ertbolle, 2830 Virum (DK); Kirk, Kristian, 3000 Helsingen (DK); Blas, Marton Rufus, 2200 Copenhagen (DK); Vilander, Jesper, 3480 Fredensborg (DK); Kildeby, Allan Reinhold, 3060 Espergarde (DK)
(74) Representative: Ellerbrächter, Dirk

(56) References cited:
- EP-A- 0 760 202
- EP-A- 1 344 445
- DE-A1- 4 426 059
- US-A1- 2002 083 695

## Description

The invention relates to an agricultural working machine with at least one spout according to the preamble of Claim 1.

DE 44 26 059 discloses a generic agricultural working machine designed as a forage harvester to whose spout is assigned a camera which detects both the end region of the spout and the loading space of the trailer. Furthermore, a monitor is provided in the vicinity of the driver's seat arranged in the vehicle cab, on which monitor are visualised the sequences recorded by the camera in such a manner that both the end region of the spout and the loading space of the transport container are visualised in one and the same representation. This has the particular advantage that the operator of the agricultural working machine is able to distinguish clearly whether the line of product escaping from the spout in the region of the discharge cap describes a parabolic trajectory which introduces the crop line reliably into loading space of the transport vehicle without the driver having to turn round and without his having to observe the spout and the transport vehicle directly. The essential disadvantage of a product jet detection device thus structured is that the operator of the agricultural working machine must draw the correct conclusions from the images generated by the camera and finally carry out the position adaptation of the spout himself. Because the operator of the agricultural working machine must monitor and control a multiplicity of machine functions in the harvesting process, the driver can quickly become overloaded by this on the one hand. On the other hand the optimised position adjustment of the spout depends substantially on the skills of the driver and, depending on experience, may vary considerably from driver to driver, so that sometimes no optimised position of the spout is found, or it is difficult to find it.

To avoid these disadvantages EP 1 344 445 proposes a camera-based system for controlling the spout, in which the sequences generated by the camera are analysed by an evaluation unit and the evaluation unit automatically generates control signals for the position change of the spout as a function of the analysis result. In this case the control signals result immediately in pressure application or pressure relief of the lifting cylinders guiding the spout and its discharge cap. An essential disadvantage of control system structured in this manner is that the possibilities of guiding the project jet depend on the kinematic possibilities of the spouts themselves. In such a system the operators of agricultural working machines and transport vehicles are not totally released from the task of monitoring the transfer process.

The object of the invention is to avoid the prior art disadvantages described and, in particular, to propose a control system for a spout of agricultural working machines which almost completely relieves the operator of the agricultural working machine of the task of monitoring the transfer process.

This object is achieved according to the invention by the characterising features of Claim 1

Because the electro-optical device assigned to the agricultural working machine records characteristic parameters of the spout and characteristic parameters of the transport vehicle and the agricultural working machine, this ensures that a control system for the spout of agricultural working machines is provided which almost completely relieves the operator of the agricultural working machine of the task of monitoring the transfer process.

In an advantageous design of the invention the characteristic parameters are kinematic and/or geometric parameters of the spout, the transport vehicle and the agricultural working machine, so that the control of the position change can be defined by means of known mathematical relations.

Since the characteristic parameters may be the filling level of the transport vehicle, the fill rate of the transport vehicle, a filling level pattern representing the filling level of the transport vehicle, the recognition of the position of the side walls of the transport vehicle, the speed of travel and/or the steering angle of the transport vehicle, the speed of travel and/or the steering angle of the agricultural working machine, the length of cut and chop quality of the crop conveyed from the spout, parameters are available which permit optimum guidance, at least of the spout, and hence uniform filling of the storage container of the transport vehicle.

In an advantageous further development of the invention the agricultural working machine and/or the transport vehicle can generate characteristic parameters which include at least the speed of travel and/or steering angle of the transport vehicle, the speed of travel and/or the steering angle of the agricultural working machine and GPS-based position data on the agricultural working machine and/or the transport vehicle. The advantage of this is that the position control of the agricultural working machine and of the transport vehicle can be incorporated in the transfer process so that rapid, precise position changing of the spout can be effected.

In an advantageous further development of the invention the filling level pattern includes the identification of patterns, these patterns including a pattern for the crop, a pattern for the storage container and a pattern for the area surrounding the storage container or a combination of these. Such a design has the advantage that the variation in filling level, the position of the agricultural working machine and of the transport vehicle relative to each other, and the position of the spout, can quickly be determined by comparing the patterns.

A position control system that is technically simple to convert is provided when the electro-optical device is coupled to a signal processing device and the signal processing device is designed so that it processes as input signals the information signals generated by the electro-optical device, information signals generated by the transport vehicle and information signals generated by the agricultural working machine or a combination of these into output signals, and so that the output signals form position control signals for controlling the position of the spout and/or the transport vehicle and/or the agricultural working machine.

Because a change of position of the spout relative to the transport vehicle can also be effected by means of the easily and rapidly convertible speed control system of the transport vehicle and/or the agricultural working machine, provision is made, in a further advantageous design of the invention, for position variation relations to be stored in the signal processing device, and for the signal processing device to generate the position control signals of the spout and/or the transport vehicle and/or the agricultural working machine as a function of one or more of these position variation relations.

Since the position control signals control the steering and/or the speed of travel of the transport vehicle and/or the agricultural working machine, the considerably more complicated actuation of the spout itself may also be dispensed with whilst still guaranteeing optimum filling of the transport vehicle.

A technically simple conversion of the detection of the transport vehicle is achieved when the electro-optical device is designed as a camera which generates a three-dimensional image at least of the storage container to be filled, so that the stream of crop to be conveyed into the storage container can be controlled very precisely, in terms of optimum filling, as a function of the spatial conditions.

Since the camera is designed as a 3D Photonic Mixer Device camera of prior art, which determines the spatial coordinate in addition to two-dimensional image coordinates from the running time measurement of the image generating signal waves, and generates a three-dimensional image from the two-dimensional image coordinates and the spatial coordinate, a spatial representation at least of the storage container is generated in a technically proven manner. The same result is obtained if the electro-optical device is designed, for example, as a panorama image camera, an infrared or laser scanner or stereo camera.

Since the filling height, the positions of the side walls, the height of the side walls, the height of the storage container and/or the transport vehicle above the ground, the transport vehicle type, the position of the roof opening of the transport vehicle and the empty volume of the storage container of the transport vehicle are derived from the three-dimensional image information, the system generates a very accurate three-dimensional image at least of the geometrical conditions of the storage container. Finally, if, in an advantageous design of the invention, filling horizons are determined from the calculated locally resolved filling heights, taking into consideration the calculated side wall heights, the transfer process can be adapted very precisely to the filling conditions of the storage container.

In an advantageous design of the invention a displacement of the impact area caused by disturbing factors can be determined, the position control of the spout and/or the transport vehicle and/or the agricultural working machine being influenced so that the actual impact area corresponds to the position of the impact area determined in the signal processing device. A typical disturbing factor may in this context be the wind velocity, the acceleration and/or the velocity of the crop stream, the lift up movement of the spout by collision between obstacles and the agricultural working machine or a combination thereof, because the crop jet is frequently deflected very intensively by this and is sometimes conveyed beyond the side walls of the storage container.

An optimum view of the transfer process and filling of the transport vehicle is obtained when the electro-optical device is arranged downstream in the product ejection direction of the spout and is coupled to the spout by means of a supporting frame structure or the electro-optical device is arranged directly to the discharge cap of the spout. This effect is supported further when, in an advantageous further development of the invention, the spout comprises, at its outlet-side end, a discharge cap that can be pivoted about a pivoting axis orientated transversely to the direction of escape of the product flow, the movement of the supporting frame structure being coupled to the movement of the discharge cap.

In another aspect of the invention the electro-optical device is designed as panorama image camera, as infrared or laser scanner or stereo camera.

The better the detection of the transfer process, the more accurately the transfer process is controlled. In this context provision is made, in a further advantageous design, for electro-optical devices to be assigned to the transport vehicle and/or the storage container, the signal process device taking into consideration the information signals from these electro-optical devices when analysing the information signals from the further electro-optical device.

Because the operator is directly relieved of the task of controlling and monitoring of the transfer process, it is extremely important that the operator of the agricultural working machine and/or the transport vehicle is actively informed of critical conditions of the transfer process. For this purpose provision is made, in an advantageous further development of the invention, for the image analysis of the signal processing device to be monitored and critical conditions that impair the derivation of image information to be signalled. In this context provision is made, in an advantageous design, for the signalling to be effected by facing a video sequence into a monitor accessible to the operator of the agricultural working machine and/or the transport vehicle.

To simplify the image analysis and for faster detection of critical conditions of the transfer process by the operator of the agricultural working machine and/or the transport vehicle, provision is made, in an advantageous design of the invention, for characteristic lines and/or orientation points to be visualised in the video sequence, the characteristic lines and/or the orientation points simulating at least the upper side wall edges. Finally, in order to be able to implement the automatic control of the transfer process efficiently, it is proposed in a further advantageous design to assign a coordinate system to the side wall edges simulated by the characteristic lines and/or the orientation points and defining the inlet opening of the storage container, so that the position of the jet of crop escaping from the spout can be controlled along this coordinate system so that finally this coordinate system also forms a characteristic parameter of the transport vehicle.

A particularly efficient application of the position variation of the spout, the agricultural working machine and the transport vehicle is provided when circumnavigating obstacles where, because of the variation in transverse distance between the agricultural working machine and the transport vehicle, the flow of crop escaping from the spout frequently no longer reaches the storage container and falls to the ground as lost product.

Since in a further advantageous design of the invention patterns of different storage container types are stored in the signal processing unit, where the pattern of the storage container generated by the electro-optical device and/or the signal processing device can be compared with the stored patterns and the appropriate trailer type can be detected and selected, this ensures that the container identification can be completed quickly and a reliable contour pattern can be used. In such a case the influence of a side wall contour that is not fully detected by the elector-optical device is reduced to an interference or interruption of the transfer process by incorrect position control of the spout.

In another aspect of the invention one gets a high-flexible analyzing tool if the patterns, generated by the electro-optical device are structured as 3D patterns and/or shape patterns and/or texture patterns and/or colour patterns.

For improving the visibility conditions of the crop stream and/or the position of the storage container detected by the electro-optical device, provision is made, to use a electro-optical device consisting of at least one camera and at least one light source, illuminating the crop stream and/or the storage container detected by the camera, whereas the at least one light source could be attached to the spout of the forage harvester and/or the chassis of the forage harvester and/or the transport vehicle. The same effect can be achieved , if the illuminating direction of the at least one light source differs from the viewing direction of the camera. In a preferred solution the at least one light source illuminates the crop stream transversally and/or in an opposite direction to the viewing direction of the camera. Such an arrangement ensures that a light scattering, based on reflection of light waves on crop stream pieces, will be avoided, what improves the visibility of the illuminated area.

Further advantageous designs constitute the subject matter of further dependent claims and are described in the following with reference to exemplary embodiments shown in several figures, where:
- Figure 1: shows a rear view of a combine harvester consisting of an agricultural working machine and transport vehicle, with a position control system according to the invention
- Figure 2: shows an elevation of a combine harvester consisting of an agricultural working machine and transport vehicle, with a position control system according to the invention
- Figure 3: shows a diagrammatic detailed view of the detection process of the electro-optical device
- Figure 4: shows a diagrammatic representation of the three-dimensional images generated with the electro-optical device
- Figure 5: shows a monitor with a video sequence visualised on it and generated by the electro-optical device.

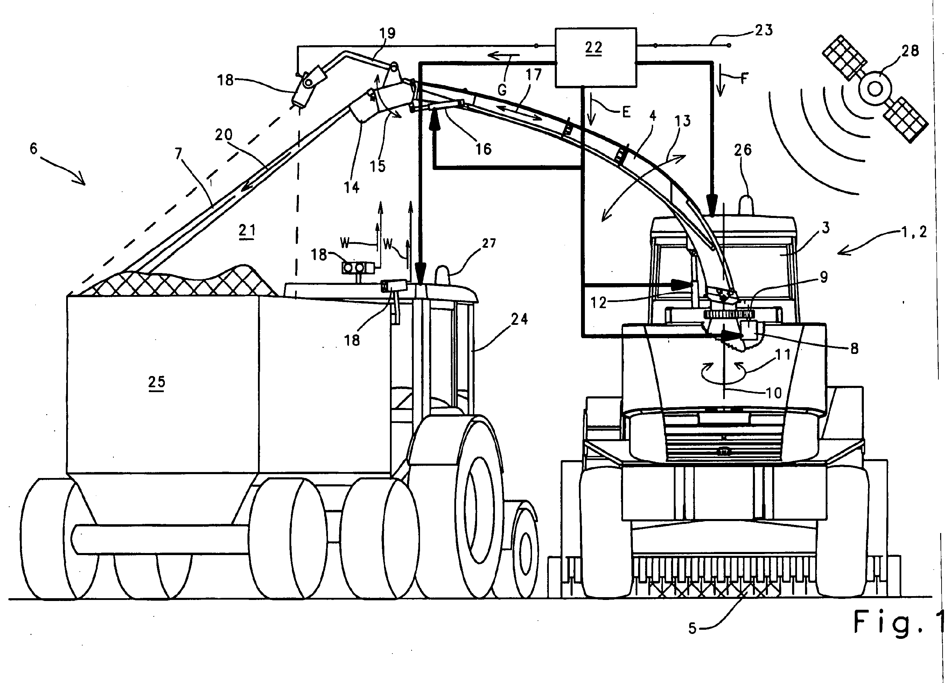

Fig. 1 shows an agricultural working machine 1 designed as a forage harvester 2, which is provided in its region arranged downstream of driver's cab 3 with a spout 4 for transferring the crop 5 received and processed by forage harvester 2 to a transport vehicle 6. To ensure that spout 4 is able, very flexibly, to transfer crop flow 7 to transport vehicle 6, spout 4 is assigned in its lower side region with a gear stage 9 that can be driven by means of a hydraulic or electric motor 8. When this gear stage 9 is activated, spout 4 can be swivelled about a vertical axis 10 according to arrow direction 11. Moreover, spout 4 is assigned, in a vertical alignment, at least one lifting cylinder 12, spout 4 being capable of performing a vertical pivoting movement according to arrow direction 13 when the lifting cylinder 12 undergoes pressure loading or pressure relief. On its upper-side end spout 4 is assigned, by a known method, a discharge cap 14 so that it can be moved pivotably, the pivoting movement being effected according to arrow direction 15 by pressurizing or depressurizing of at least one lifting cylinder 16. It is within the scope of the invention for the spout 4 to be provided with a telescoping design for achieving large transfer widths, enabling it to realize a variation in length according to arrow direction 17.

In the manner according to the invention spout 4 is assigned at least one electro-optical device 18, to be described in greater detail below, which device is fastened directly to the pivotably movable discharge cap 14 by means of a supporting frame structure 19 in the exemplary embodiment shown. Electro-optical device 18 is here positioned so that it is arranged downstream of spout 4 in the direction of product discharge 20, and at least partially detects crop flow 7 and transport vehicle 6 from an upper-side region. It lies within the scope of the invention for at least one or a plurality of electro-optical devices 18 to be positioned in any position of spout 4 or forage harvester 2, provided that detection region 21 of electro-optical device 18 at least partially detects transport vehicle 6.

Electro-optical device 18 is coupled either wire-based or wirelessly to a signal processing device 22 assigned in the exemplary embodiment shown to agricultural working machine 1, signal processing device 22 being integrated, for example, in the so-called data bus system 23 of forage harvester 2 and, in the simplest case, being arranged in driver's cab 3. In order to determine so-called geo-referenced position data of agricultural working machine 1 and spout 4 assigned to it, and of transport vehicle 6 consisting of tractor 24 and storage container 25, both forage harvester 2 and tractor 24 are provided with a so-called GPS system 26, 27, which by a known method, and hence a method which is not described in further detail, is able to generate satellite 28 - based position data.

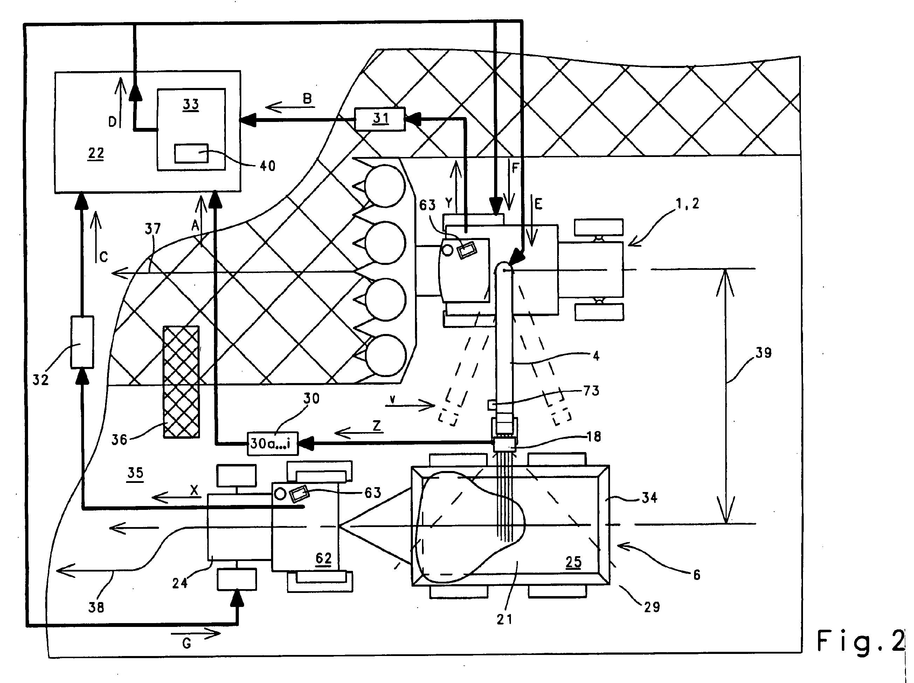

However, since detection region 21 of electro-optical device 18 at least partially detects storage container 25 of transport vehicle 6, according to Figure 2, and since detection region 21 also detects surrounding 29 of transport vehicle 6, the possibility is provided for electro-optical device 18 to determine characteristic parameters 30 of spout 4, transport vehicle 6 and agricultural working machine 1 in a manner to be described in more detail below. Depending on what information is available on generating the characteristic parameters, the characteristic parameters may be kinematic and geometric parameters 30a-i of spout 4, transport vehicle 6 and/or agricultural working machine 1. For deriving characteristic parameters 30, electro-optical device 18 is coupled wirelessly or wire-based to signal processing device 22, signal processing device 22 being assigned to agricultural working machine 1 in the exemplary embodiment described. It would also be conceivable for signal processing device 22 to be assigned stationarily to a central computer unit or to transport vehicle 6. Therefore information signals Z generated by electro-optical device 18 and incorporating characteristic parameters 30 at the same time form input signals A for signal processing device 22. Furthermore, forage harvester 2 can be designed so that the forage harvester 2 itself generates information signals Y relating to agricultural working machine 1 and transmits them as further input signals B directly to signal processing device 22. Moreover, transport vehicle 6 can be designed so that it also generates information signals X related to transport vehicle 6 and transmits them as input signals C to signal processing device 22. Information signals X, Y generated by agricultural working machine 1 and transport vehicle 6 may, for example, include the travel speed, steering angle and GPS coordinates of forage harvester 2 or transport vehicle 6, the former then forming characteristic parameters 31 of agricultural working machine 1 generated by agricultural working machine 1, and the latter forming characteristic parameters 32 of transport vehicle 6 generated by transport vehicle 6. Based on the different information signals X, Y, the processing device 22 is also able to generate so-called relative position data, which describe the relative position between forage harvester 2 and transport vehicle 6.

Finally, software modules 33 are stored in signal processing unit 22, which modules derive the corresponding characteristic parameters 30 in a manner to be described in greater detail below from information signals Z from electro-optical device 18, where these characteristic parameters 30 may be filling level 30a of transport vehicle 6, the fill rate of transport vehicle 6, a filling level pattern 30b representing the filling level of transport vehicle 6, the detection of the position of side walls 34 (30c) and travel speed 30d and steering movement 30e of transport vehicle 6, travel speed 30f and steering movement 30g of agricultural working machine 1, as well as length of cut (30h) and chop quality 30i of crop flow 7 conveyed out of spout 4. Moreover, output signals D, which form position control signals E for position controlling of spout 4, as well as position signals F, G for position controlling of agricultural working machine 1 and/or transport vehicle 6, are generated in signal processing device 22 in the manner according to the invention, taking into consideration the different input signals A-C.

Position control signals E, which effect the position control of spout 4, an effect the activation or deactivation of hydraulic or electric motor 8 assigned to spout 4, according to Fig. 1, so that a movement of spout 4 about its vertical axis 10 is triggered with gear stage 9 coupled to it. Furthermore, however, position signals E may also be designed so that they effect pressure loading or pressure relief of lifting cylinders 12, 16 assigned to spout 4 or discharge cap 14, so that on the one hand spout 4 according to arrow direction 13 can be pivoted in the vertical direction, and on the other hand discharge cap 14 performs a movement in the vertical direction according to arrow direction 15. If spout 4 is of a telescopic design, position control signals E may trigger the telescopic extension or shortening of spout 4 according to arrow direction 17, which is lifting cylinder based, for example. Because of the position control of spout 4 described, the movement of crop flow 7 escaping from spout 4 can be freely controlled in the space, which is ultimately a condition for ensuring that the geometry of storage container 25 to be detected can be optimally filled with crop.

Because on the one hand the position control of spout 4 is subject to highly complex geometric relationships, and because on the other hand delays due to inertia can arise when converting the generated position control signals E for actuating spout 4, it may be advantageous for transport vehicle 6 and/or agricultural working machine 1 itself to be incorporated in the process of position control, which is ultimately a control of the path of movement 20 of crop flow 7 escaping from spout 4. In a preferred design this can be effected in that position control signals F, G generated by signal processing device 22 and determined for position control of agricultural working machine 1 or transport vehicle 6, each effect an increase or reduction in the respective travel speed and/or influence the respective steering angle on forage harvester 2 and tractor 24. This also enables the optimum filling of storage container 25 also to be assisted by the fact that the relative speed of agricultural working machine 1 and transport vehicle 6, as well as their alignment to each other, based on the direction of travel, are varied, which ultimately results in a variation in the impact region of crop flow discharged 7 discharged from spout 4 on storage container 25.

If agricultural working machine 1 and transport vehicle 6 have to circumnavigate obstacles 36 located in territory 35 to be worked, such as trees or telegraph poles, the situation then arises that agricultural working machine 1 and transport vehicle 6 separate from each other. Now in order also to ensure that crop flow 7 safely reaches storage container 25 of transport vehicle 6 when circumnavigating an obstacle 36 represented in Figure 2 as a shaded area, the respective steering angle dependent curved path 37, 38 of forage harvester 2 and transport vehicle 6 for circumnavigating obstacle 36, as well as the position of spout 4 in the space, play an essential role. Depending on the kinematic movement possibilities of spout 4, it may be necessary for the steering processes of agricultural working machine 1 and of transport vehicle 6 to be adapted to each other so that crop flow 7 is able to reach storage container 25. If an obstacle has to be circumnavigated the position control may be structured, for example, so that signal processing device 22 generates output signals D from input signals A-C received from spout 4, agricultural working machine 1 and transport vehicle 6, which input signals may include among other things, as described above, the steering angles and speeds of travel of forage harvester 2 and tractor 24, these output signals D effecting a position control of spout 4 and/or of agricultural working machine 1 and/or transport vehicle 6. A preferred design of such a position control may, for example, be provided so that steering angles of forage harvester 2 and tractor 24, which are in opposite directions due to circumnavigation of obstacle 36 on the right and left side, are adapted to each other and are limited so that a certain transverse distance 39 between forage harvester 2 and transport vehicle 6 is not exceed and so that a position variation of spout 4 always ensures transfer of crop flow 7 into storage container 25. Signal processing device 22 therefore generates different position control signals E-G, as a function of the detected characteristic parameters 30-32, or a combination of them, which signals, taking into consideration the kinematic possibilities of spout 4, agricultural working machine 1 and transport vehicle 6, effect their position variation. In the simplest case the so-called oversteering of spout 4, agricultural working machine 1 and transport vehicle 6 can be avoided by storing in signal processing device 22 characteristics in which different position variation relationships 40 are coded. A typical position variation relationship 40 would be, for example, for the extremely elaborate actuation of spout 4 to be replaced, for its position variation, by a control of the travel speed and/or steering movement of the agricultural working machine and/or transport vehicle 6 if the position of spout 4 required for optimum filling of storage container 25 can thereby be achieved more quickly and with little steering expenditure.

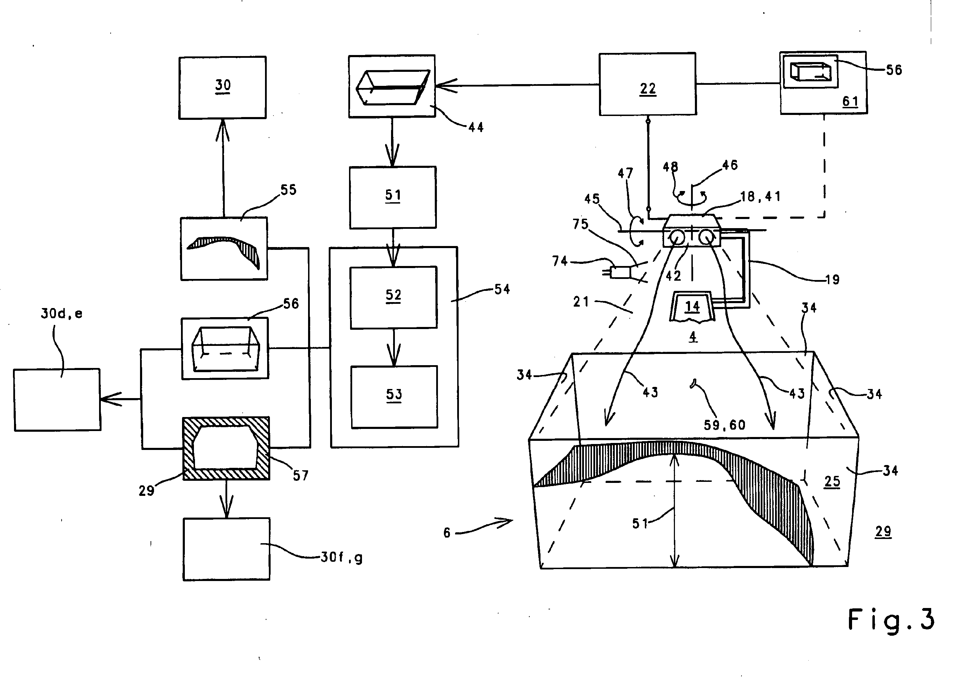

Fig. 3 shows a detailed representation of electro-optical device 18, which in a preferred design is designed as a camera system 41. For generating three-dimensional images camera 41 may, for example, be designed as a so-called Photonic Mixer Device camera 42, which is of prior art and is not therefore described in detail here. Photonic Mixer Device cameras 42 generate not only two-dimensional mage coordinates from the running time measurement of image generating signal waves 43, but also a spatial coordinate, and finally a three-dimensional image 44 of detection region 21 is determined from the two-dimensional image coordinates and spatial coordinate. As already described, camera 41 can on the one hand be coupled by means of a supporting frame structure 19 directly to the moving discharge cap 14 of spout 4. However, it is also conceivable for electro-optical device 18 to be assigned to spout 4 at any point and to perform position variations of spout 4 directly. If detection region 21 does not fully or adequately detect the object to be detected, in Figure 3 at least storage container 25 of a transport vehicle 6, provision may be made for electro-optical device 18 to be swivelled about a horizontal axis 45 and a vertical axis 46 according to arrow directions 47, 48, so that electro-optical device 18 can detect transport vehicle 6 in the horizontal and vertical directions in the manner of a scanner. It also lies within the scope of the invention for electro-optical device 18 also to be constructed so that it is designed as a panorama image camera, an infrared or laser scanner or stereo camera, a stereo camera generating three-dimensional image 44 by superimposing the image sequences of both cameras 41 in a manner of prior art, which is not therefore described in detail here

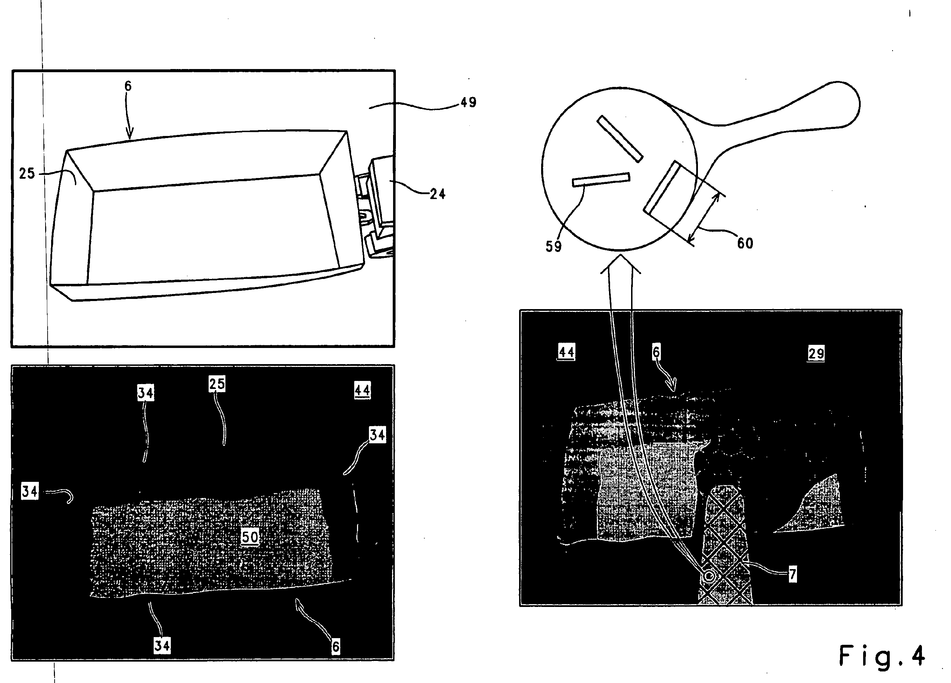

Fig. 4 shows in the upper representation a video mage recording 49 produced by a video camera not represented in further detail, which recording reproduces are real view of a transport vehicle 6 consisting of tractor 24 and storage container 25. If use is made of electro-optical devices 18 described previously, in Figure 3 for example, such as a stereo camera or Photonic Mixer Device camera 42, either camera 41 directly, or signal processing device 22 coupled to camera 41, generates three-dimensional image 44 represented in Fig. 4 at the bottom, the left representation showing only transport vehicle 6, whilst in the right representation not only transport vehicle 6, but also crop flow 7 discharged from spout 4, not visible, is shown. Because the image processing software of prior art assigned to respective camera 41 has generated a three-dimensional image 44, the spatial position and the height of side walls 34, as well as empty volume 50 of storage container 25 of transport vehicle 6 can be determined from the image information, e.g. in signal processing device 22. If a crop flow 7 has already been conveyed into storage container 25, filling height 51 can also be derived from three-dimensional image 44. Whilst the derived filling height 51 generally describes a certain region of storage container 25 in a spatially resolved manner, filling heights 51 may be combined in signal processing device 22, for example, to form a filling height horizon 52 for the entire storage container 25. Because of the three-dimensional image information it is also possible to determine a loading condition 53 of storage container 25 taking into consideration the determined filling height horizontal 52 and heights of the individual side walls 34. Furthermore it leis in the scope of invention to derive from three-dimensional image 44 an information about the height of the storage container 25 and/or the transport vehicle 6 above the ground, the storage container 25 type and, if existing, the position of a so-called roof opening of the storage container 25.

Because the image information is highly complex, the image information analysis may be based in a preferred design on the definition and detection of so-called patterns. As represented diagrammatically in Fig. 3, the determined filling height horizon 52 and/or loading condition 53 derived from it, is stored, for example, in a filling level pattern 54, filling level pattern 54 being derived from the identification of patterns in three-dimensional image 44 generated. For this purpose signal processing device 22, or directly, respective camera 41, is designed so that it generates from the generated three-dimensional image 44 at least one pattern 55 for crop 7 conveyed into storage container 25, filling level pattern 54, a pattern 56 for describing the position of side walls 34 of storage container 25, and at least one further pattern 57 for describing surrounding area 29 of storage container 25. All of these patterns 55-57 can be structured as 3D patterns and/or shape patterns and/or texture patterns and/or colour patterns.

Furthermore, signal processing unit 22, or directly, camera 41, can be assigned a storage unit 61 (shown in fig. 3) in which are stored predefined texture patterns 56 of special types of storage containers 25, so that the type of storage container 25 actually detected can be determined more quickly by comparing the generated three-dimensional images 44 with the stored patterns 56 of storage containers 25, and so that the system for position control of spout 4 can be operated generally more quickly.

Depending on the quality of three-dimensional images 44, signal processing device 22, or directly, respective camera 41, can be designed so that it detects individual particles 59 of crop flow 7 from the image information of the three-dimensional images 44, and generates from this information on length of cut 60 and hence the chop quality.

Since signal processing device 22 coupled to the respective electro-optical device 18, or directly, the respective electro-optical device 18, generates a pattern 57 for surrounding area 29, the characteristic parameters speed of travel and steering movement 30f, g of agricultural working machine 1 may be derived from the shift of this pattern 57 from one image to the next when spout device 4 is not moved. Similarly, the characteristic parameters 32 speed of travel and steering movement 30d,e of transport vehicle 6 may be derived from the shift of pattern 56 representing storage container 25 to pattern 57, representing surrounding area 29, when spout 4 is not moved. On the contrary, the variation in loading condition 53 and the variation in the position of spout 4 in the space, which are ultimately all the components of characteristic parameters 30 generated by electro-optical device 18, may be derived from the change of position and shape of pattern 55, representing filling level pattern 54, between two images 44.

So that the three-dimensional images 44 generated by electro-optical device 18 are available not only for position control but also for the operator of the agricultural working machine and, if necessary, for the operator of transport vehicle 6, as shown in Figure 2, a monitor 63 can be assigned to driver's cab 3 of forage harvester 2 and/or driver's cab 62 of tractor 24, on which monitor the three-dimensional images 44 are visualised, in the simplest case as a continuous two-dimensional video sequence.

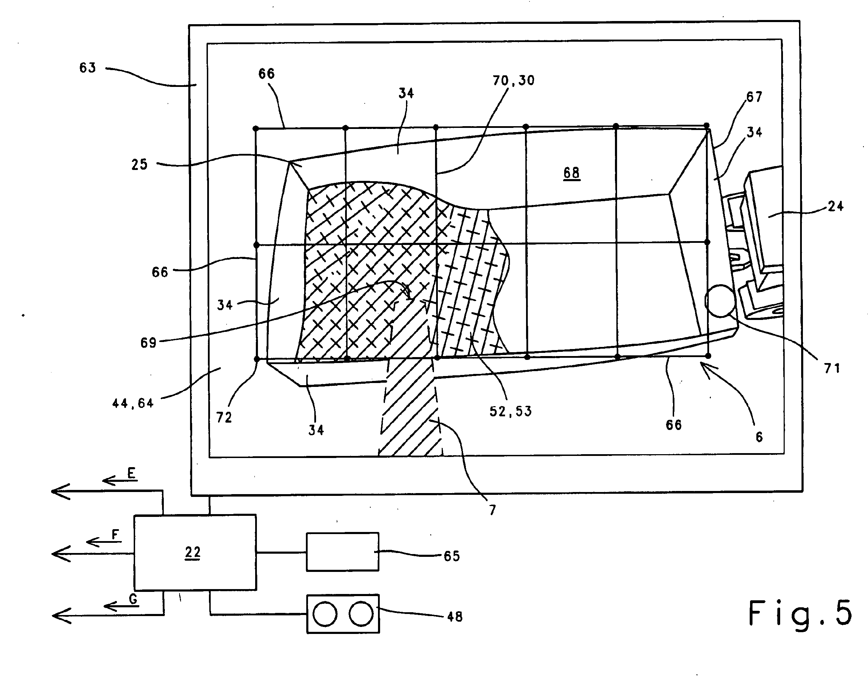

Fig. 5 shows an enlarged representation of monitor 63 described, on which either three-dimensional image 44 or a two-dimensional video sequence 64 is visualised. In the further designs account is taken only of video sequence 64, for reasons of simplification, although also applies similarly to the representation of three-dimensional image 44. Video sequence 64 shows transport vehicle 6 consisting of storage container 25 and tractor 24. Furthermore, side walls 34 and filling height horizon 52 defining loading condition 53, as well as crop flow 7 discharged from spout 4, are visualised. Signal processing device 22 coupled to monitor 63 and electro-optical device 18 assigned to it, are also represented diagrammatically. in addition to the image analysis already described, signal processing device 22 may also be assigned an image analysis software 65 of prior art, which software assigns to the contours of side walls 34 at least characteristic lines 66 and/or orientation points 72 on the upper side, which lines have either already compensated for the camera-related, so-called barrel effects, as shown, or other wise simulates the barrel shape directly. In such a representation characteristic lines 66 and/or orientation points 72 define upper side wall edges 67 and hence the shape of inlet opening 68 of storage container 25 inside which impact region 69 of harvested crop line 7 must move. Finally, taking into consideration these characteristic lines 66 and/or orientation points 72 and filling height horizon 52, impact region 69 is guided inside the structure of inlet opening 68 for the purpose of optimum filling of transport container 6. This is achieved, as already described, in that position control signals EG generated by signal processing 22 effect a position variation of spout 4 and/or a variation in travel speed and/or steering angle of self-propelled working machine 1 or tractor 24. To facilitate this control process provision may also be made for inlet opening 68 defined by characteristic lines 66 and/or orientation points 72 to be assigned a coordinate system 70 and for the geometric coordinates of this coordinate system 70 to form directly characteristic parameters 30 of transport vehicle 6, on the basis of which impact region 69 of crop jet 7 is guided. In addition, critical conditions, such as the escape of impact region 69 from characteristic lines defining inlet opening 68, can be indicated in video sequence 64 by graphic warning signals 71, circles for example. In a simplified representation characteristic lines 66 may only be displayed on monitor 63 when critical conditions arise during loading of transport vehicle 6, for example when impact region 69 exceeds characteristic lines 66 and/or orientation points 72. However, deficient image quality may also be regarded as a critical condition in this context as it no longer permits adequate derivation of image information, so that the operator of agricultural working machine 1 must intervene in the control process of spout 4.

It also lies within the scope of the invention for electro-optical devices 18 also to be assigned, according to Figure 1, to storage container 25 and/or tractor 24, the information signals W from which devices are taken into consideration in signal processing device 22 in a similar manner to information signals X-Z.

In a further design of the invention provision may also be made for a displacement of impact region 69, caused by disturbing factors, to be detected, the position control of spout 4 and/or transport vehicle 6 and/or agricultural working machine 1 being influenced so that the actual impact region 69 corresponds to the position of impact region 69 of crop flow 7 determined in signal processing device 22. According to Figure 2 such a disturbing factor may, for example, be wind velocity v, which can be determined by suitable wind velocity sensors 73 assigned in the exemplary embodiment shown to spout 4, the acceleration and/or the velocity of the crop stream, the lift up movement of the spout 4 by collision between obstacles and the agricultural working machine 1 or a combination of said disturbing factors.

Furthermore, the position signals of agricultural working machine 1 and transport vehicle 6, generated by the different GPS systems 26, 27 sown in Fig. 1, may also be considered as their characteristic parameters 31, 32 when generating the different position control signals E-G.

In another configuration of the invention electro-optical device 18 consists of at least one camera 41 and at least one light source 74 (shown in fig. 3), whereas the light source 74 illuminates the crop stream 7 and/or the storage container 25 detected by the camera 41. For illuminating the crop stream 7 and the storage container 25 the at least one light source 74 is attached to the spout 4 of the forage harvester 2 or its chassis or on the transport vehicle 6 in such a manner that the direction of illumination, the illuminating area 75, differs from the viewing direction of the camera 41. In a preferred arrangement the illuminating area 75 is situated transversally and/or in an opposite direction to the viewing direction of the camera 41.

### List of reference symbols:

- 1: Agricultural working machine
- 2: Forage harvester
- 3: Driver's cab
- 4: Spout
- 5: Crop
- 6: Transport vehicle
- 7: Crop flow
- 8: Hydraulic or electric motor
- 9: Gear stage
- 10: Vertical axis
- 11: Arrow direction
- 12: Lifting cylinder
- 13: Arrow direction
- 14: Discharge cap
- 15: Arrow direction
- 16: Lifting cylinder
- 17: Arrow direction
- 18: Electro-optical device
- 19: Support frame structure
- 20: Product discharge direction
- 21: Detection region
- 22: Signal processing device
- 23: Data bus
- 24: Tractor
- 25: Storage container
- 26: GPS system
- 27: GPS system
- 28: Satellite
- 29: Surrounding area
- 30: Characteristic parameter
- 31: Characteristic parameters
- 32: Characteristic parameters
- 33: Software module
- 34: Side wall
- 35: Territory to be worked
- 36: Obstacle
- 37: Path of movement
- 38: Path of movement
- 39: Transverse distance
- 40: Position variation relation
- 41: Camera
- 42: PMD camera
- 43: Signal wave
- 44: 3D-image
- 45: Horizontal axis
- 46: Vertical axis
- 47: Arrow direction
- 48: Arrow direction
- 49: Video image
- 50: Empty volume
- 51: Filling height
- 52: Filling height horizon
- 53: Loading condition
- 54: Filling level pattern
- 55: Pattern
- 56: Pattern
- 57: Pattern
- 58:
- 59: Particle
- 60: Length of cut
- 61: Storage unit
- 62: Driver's cab
- 63: Monitor
- 64: Video sequence
- 65: Image analysis software
- 66: Characteristic line
- 67: Upper side wall edge
- 68: Inlet opening
- 69: Impact region
- 70: Coordinate system
- 71: Warning signal
- 72: Orientation point
- 73: Wind velocity meter
- 74: Light source
- 75: IIIuminating area

- A: Input signal
- B: Input signal
- C: Input signal
- D: Output signal
- E: Position control signal
- F: Position control signal
- G: Position control signal

- W: Information signal
- X: Information signal
- Y: Information signal
- Z: Information signal
- FR: Direction of travel
- v: Wind velocity

## Claims

1. An agricultural working machine (1), in particular a forage harvester (2), with at least one spout (4) for conveying crop (5) received and processed to a transport vehicle (6), wherein an electro-optical device (18) is provided for the direction control of the spout (4) at least during the process of conveying to the transport vehicle (6),
**characterised in that**
the electro-optical device (18) detects characteristic parameters (30) of spout (4) and characteristic parameters (30) of the transport vehicle (6) and of the agricultural working machine (1).

2. The agricultural working machine, in particular a forage harvester, with at least one spout according to claim 1,
**characterised in that**
the characteristic parameters (30) are kinematic and/or geometric parameters of the spout (4), the transport vehicle (6) and the agricultural working machine (1).

3. The agricultural working machine, in particular a forage harvester, with at least one spout according to Claim 2,
**characterised in that**
the characteristic parameters may be the filling level (30a, 51) of the transport vehicle (6), the fill rate of the transport vehicle (6), a filling level pattern (30b, 54) representing the filling level of the transport vehicle (6), detection of the position (30c) of the side walls (34) of the transport vehicle (6, 25), the travel speed (30d) and/or the steering angle (30e) of the transport vehicle (6), the travel speed (30f) and/or the steering angle (30g) of the agricultural working machine (1), the length of cut (30h) and the chop quality (30i) of the crop (7) conveyed from the spout (4).

4. The agricultural working machine, in particular a forage harvester, with at least one spout according to one of the preceding claims,
**characterised in that**
the agricultural working machine (1) and/or the transport vehicle (6) generate
characteristic parameters (31, 32), wherein these characteristic parameters (31, 32) may be at least the travel speed and/or the steering angle of the transport vehicle (6), the travel speed and/or the steering angle of the agricultural working machine (1) and GPS-based position data of the agricultural working machine (1) and/or of the transport vehicle (6) and their relative position to each other.

5. The agricultural working machine, in particular a forage harvester, with at least one spout according to Claim 3,
**characterised in that**
the filling level pattern (54) includes the identification of patterns (55-57), wherein the pattern (55-57) includes a pattern (55) for the crop (7), a pattern (56) for the storage container (25) and a pattern (57) for the surrounding area (29) of the storage container (25) or a combination thereof.

6. The agricultural working machine, in particular a forage harvester, with at least one spout according to one of the preceding claims,
**characterised in that**
the electro-optical device (18) is coupled to a signal processing device (22), and the signal processing device (22) is designed so that it processes as input signals (A-C) the information signals (Z) generated by the electro-optical device (18), information signals (X, W) generated by the transport vehicle (6), and information signals (Y, W) generated by the agricultural working machine (1), or a combination thereof, to output signals, and **in that** the output signals (D) form position control signals (E-G) for the position control of the spout (4) and/or the transport vehicle (6) and/or the agricultural working machine (1).

7. The agricultural working machine, in particular a forage harvester, with at least one spout according to Claim 6,
**characterised in that**
position variation relations (40) are stored in the signal processing device (22), and **in that** the signal processing device (22) generates the position control signals (E-G) of the spout (4) and/or the transport vehicle (6) and/or the agricultural working machine (1) as a function of one or a plurality of these position variation relations (40).

8. The agricultural working machine, in particular the forage harvester, with at least one spout according to one of the preceding claims,
**characterised in that**
the position control signals (F, G) controls the steering and/or the speed of travel of the transport vehicle (6) and/or the agricultural working machine (1).

9. The agricultural working machine, in particular a forage harvester, with at least one spout, according to one of the preceding claims,
**characterised in that**
the electro-optical device (18) is designed as a camera (41).

10. The agricultural working machine, in particular a forage harvester, with at least one spout according to Claim 9,
**characterised in that**
the camera (41) is designed as a 3D Photonic Mixer Device camera (42) of prior art, which determines not only two-dimensional image coordinates from the running time measurement of the image generating signal waves (43), but also the spatial coordinate, and generates a three-dimensional image (44) from the two-dimensional image coordinates and the spatial coordinate.

11. The agricultural working machine, in particular a forage harvester, with at least one spout according to Claim 10,
**characterised in that**
the filling height (51), the positions of the side walls (34), the height of the side walls (34), the height of the storage container (25) and/or the transport vehicle (6) above the ground, the storage container /25) type, the position of the roof opening of the storage container (25) and the empty volume (50) of the storage container (25) of the transport vehicle (6) are derived from the three-dimensional image information (44).

12. The agricultural working machine, in particular a forage harvester, with at least one spout according to Claim 11,
**characterised in that**
filling height horizons (52) are determined from the calculated locally resolved filling heights (51), and **in that** loading conditions (53) are determined taking into consideration the calculated side wall heights (34).

13. The agricultural working machine, in particular a forage harvester, with at least one spout according to one of the preceding claims,
**characterised in that**
a displacement of the impact region (69) caused by disturbing factors is detected, wherein the position control of the spout (4) and/or the transport vehicle (6) and/or the agricultural working machine (1) is influenced so that the real impact region (69) corresponds to the position of the impact region (69) determined and/or predicted in the signal processing device (22).

14. The agricultural working machine, in particular a forage harvester, with at least one spout according to Claim 13,
**characterised in that**
the disturbing factor is the wind velocity (v), the acceleration and/or the velocity of the crop stream, the lift up movement of the spout (4) by collision between obstacles and the agricultural working machine (1) or a combination thereof.

15. The agricultural working machine, in particular a forage harvester, with at least one spout according to one of the preceding claims,
**characterised in that**
the electro-optical device (18) is arranged downstream of the spout (4) in the direction of the product discharge (20), and is coupled by means of a support frame structure (19) to the spout (4) or the electro-optical device (18) is arranged directly to the discharge cap (14) of the spout (4).

16. The agricultural working machine, in particular a forage harvester, with at least one spout according to Claim 15,
**characterised in that**
the spout (4) comprises at its outlet-side end a discharge cap (14) that can be pivoted transversely to the direction of discharge (20) of the crop flow (7), wherein the movement of the support frame structure (19) is coupled to the movement (15) of the discharge cap (14).

17. The agricultural working machine, in particular a forage harvester, with at least one spout according to Claim 9,
**characterised in that**
the electro-optical device (18) is designed as panorama image camera, an infrared or laser scanner or stereo camera.

18. The agricultural working machine, in particular a forage harvester, with at least one spout according to one of the preceding claims,
**characterised in that**
electro-optical devices (18) are assigned to the transport vehicle (6) and/or the storage container (25), wherein the signal processing device (22) takes into account the information signals (W) from these electro-optical devices (18) when analysing the information signals (X-Z) of the further electro-optical device (18).

19. The agricultural working machine, in particular a forage harvester, with at least one spout according to one of the preceding claims,
**characterised in that**
the image analysis of the signal processing device (22) is monitored and **in that** critical conditions which impair the derivation of image information are signalled.

20. The agricultural working machine, in particular a forage harvester, with at least one spout according to Claim 19,
**characterised in that** - the signalling takes place by facing a video sequence (64) into a monitor (63) accessible to the operator of the agricultural working machine (1) and/or of the transport vehicle (6).

21. The agricultural working machine, in particular a forage harvester, with at least one spout according to Claim 20,
**characterised in that**
characteristic lines (66) and/or orientation points (72) are visualised in the video sequence (64).

22. The agricultural working machine, in particular a forage harvester, with at least one spout according to Claim 21,
**characterised in that**
the characteristic lines (66) and/or orientation points (72) simulate at least the upper side wall edges (67).

23. The agricultural working machine, in particular a forage harvester, with at least one spout according to one of Claims 20 and 21,
**characterised in that**
the upper side wall edges (67) defined by the characteristic lines (66) and/or the orientation points (72) define the inlet opening (68) of the storage container (25), wherein a coordinate system (70) is assigned to the inlet opening (68).

24. The agricultural working machine, in particular a forage harvester, with at least one spout according to Claim 23,
**characterised in that**
the coordinate system (70) forms a characteristic parameter (30) of the - transport vehicle (6), and **in that** the position variation of the spout (4) is effected along the coordinate system (70).

25. The agricultural working machine, in particular a forage harvester, with at least one spout according to Claim 6,
**characterised in that**
the position control of the spout (4), of the agricultural working machine (1) and
of the transport vehicle (6) is used when circumnavigating (37, 38) obstacles (36).

26. The agricultural working machine, in particular a forage harvester, with at least one spout according to one of the preceding claims,
**characterised in that**
patterns (56) of different storage container types are stored in the signal processing device (22), wherein that the pattern (56) of the storage container (25) generated by the electro-optical device (18) and/or the signal processing device (22) is compared with the stored patterns (56) and **in that** the suitable trailer type is detected and selected.

27. The agricultural working machine, in particular a forage harvester, with at least one spout according to claim 5 and/or 26,
**characterised in that**,
the patterns (55-57) are structured as 3D patterns and/or shape patterns and/or texture patterns and/or colour patterns.

28. The agricultural working machine, in particular a forage harvester, with at least one spout according to one of the preceding claims,
**characterised in that**
the electro-optical device (18) consists of at least one camera (41) and at least one light source (74), illuminating the crop stream and/or the storage container detected by the camera (41).

29. The agricultural working machine, in particular a forage harvester, with at least one spout according to claim 28,
**characterised in that**,
the at least one light source (74) is attached to the spout (4) of the forage harvester (2) and/or the chassis of the forage harvester (2) and or the transport vehicle (6).

30. The agricultural working machine, in particular a forage harvester, with at least one spout according to claim 28 and/or claim 29,
**characterised in that**
the illuminating direction of the at least one light source (74) differs from the viewing direction of the camera (41).

31. The agricultural working machine, in particular a forage harvester, with at least one spout according to claim 30,
**characterised in that**
the illuminating area (75) of the at least one light source (74) illuminates the crop stream transversally and/or in an opposite direction to the viewing direction of the camera (41).

## Patentansprüche

1. Landwirtschaftliche Arbeitsmaschine (1), insbesondere ein Futtermittelernter (2), mit wenigstens einem Auswurfstutzen (4) zum Fördern des aufgenommenen und verarbeiteten Ernteguts (5) zu einem Transportfahrzeug (6), wobei eine elektro-optische Vorrichtung (18) für die Richtungssteuerung des Auswurfstutzens (4) wenigstens während des Vorgangs des Förderns zum Transportfahrzeug (6) bereitgestellt wird,
**dadurch gekennzeichnet, dass**
die elektro-optische Vorrichtung (18) charakteristische Parameter (30) des Auswurfstutzens (4) und charakteristische Parameter (30) des Transportfahrzeugs (6) und der landwirtschaftlichen Arbeitsmaschine (1) erfasst.

2. Landwirtschaftliche Arbeitsmaschine, insbesondere ein Futtermittelernter, mit wenigstens einem Auswurfstutzen nach Anspruch 1,
**dadurch gekennzeichnet, dass**
die charakteristischen Parameter (30) kinematische und/oder geometrische Parameter des Auswurfstutzens (4), des Transportfahrzeugs (6) und der landwirtschaftlichen Arbeitsmaschine (1) sind.

3. Landwirtschaftliche Arbeitsmaschine, insbesondere ein Futtermittelernter, mit wenigstens einem Auswurfstutzen nach Anspruch 2,
**dadurch gekennzeichnet, dass**
die charakteristischen Parameter der Füllstand (30a, 51) des Transportfahrzeugs (6), die Füllrate des Transportfahrzeugs (6), ein Füllstandsmuster (30b, 54), welches den Füllstand des Transportfahrzeugs (6) darstellt, die Erfassung der Position (30c) der Seitenwände (34) des Transportfahrzeugs (6, 25), die Fahrgeschwindigkeit (30d) und/oder der Lenkwinkel (30e) des Transportfahrzeugs (6), die Fahrgeschwindigkeit (30f) und/oder der Lenkwinkel (30g) der landwirtschaftlichen Arbeitsmaschine (1), die Länge des Schnitts (30h) und die Häckselqualität (30i) des Ernteguts (7), welches aus dem Auswurfstutzen (4) gefördert wird, sein können.

4. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die landwirtschaftliche Arbeitsmaschine (1) und/oder das Transportfahrzeug (6) charakteristische Parameter (31, 32) erzeugen, wobei diese charakteristischen Parameter (31, 32) wenigstens die Fahrgeschwindigkeit und/oder der Lenkwinkel des Transportfahrzeugs (6), die Fahrgeschwindigkeit und/oder der Lenkwinkel der landwirtschaftlichen Arbeitsmaschine (1) und GPS basierte Positionsdaten der landwirtschaftlichen Arbeitsmaschine (1) und/oder des Transportfahrzeugs (6) und ihrer relativen Position zueinander sein können.

5. Landwirtschaftliche Arbeitsmaschine, insbesondere ein Futtermittelernter, mit wenigstens einem Auswurfstutzen nach Anspruch 3,
**dadurch gekennzeichnet, dass**
das Füllstandsmuster (54) die Identifikation der Muster (55-57) umfasst, wobei das Muster (55-57) ein Muster (55) für das Erntegut (7), ein Muster (56) für den Sammelbehälter (25) und ein Muster (57) für die umgebende Fläche (29) des Sammelbehälters (25) oder eine Kombination daraus umfasst.

6. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die elektro-optische Vorrichtung (18) mit einer Signal verarbeitenden Vorrichtung (22) gekoppelt ist und die Signal verarbeitende Vorrichtung (22) so ausgelegt ist, dass sie als Eingabesignale (A-C) die Informationssignale (Z), welche durch die elektro-optische Vorrichtung (18) erzeugt werden, die Informationssignale (X, W), welche durch das Transportfahrzeug (6) erzeugt werden, und die Informationssignale (Y, W), welche durch die landwirtschaftliche Arbeitsmaschine (1) erzeugt werden, oder eine Kombination davon zu Ausgabesignalen verarbeitet und dass die Ausgabesignale (D) Positionssteuersignale (E-G) für die Positionssteuerung des Auswurfstutzens (4) und/oder des Transportfahrzeugs (6) und/oder der landwirtschaftlichen Arbeitsmaschine (1) bilden.

7. Landwirtschaftliche Arbeitsmaschine, insbesondere ein Futtermittelernter, mit wenigstens einem Auswurfstutzen nach Anspruch 6,
**dadurch gekennzeichnet, dass**
die Positionsveränderungsbeziehungen (40) in der Signal verarbeitenden Vorrichtung (22) gespeichert sind und dass die Signal verarbeitende Vorrichtung (22) die Positionssteuersignale (E-G) des Auswurfstutzens (4) und/oder des Transportfahrzeugs (6) und/oder der landwirtschaftlichen Arbeitsmaschine (1) als eine Funktion einer oder einer Mehrzahl dieser Positionsveränderungsbeziehungen (40) erzeugt.

8. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die Positionssteuersignale (F, G) das Lenken und/oder die Fahrgeschwindigkeit des Transportfahrzeugs (6) und/oder der landwirtschaftlichen Arbeitsmaschine (1) steuern.

9. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die elektro-optische Vorrichtung (18) als eine Kamera (41) ausgelegt ist.

10. Landwirtschaftliche Arbeitsmaschine, insbesondere ein Futtermittelernter, mit wenigstens einem Auswurfstutzen nach Anspruch 9,
**dadurch gekennzeichnet, dass**
die Kamera (41) als eine 3D Photomischdetektor-Kamera (42) nach dem Stand der Technik ausgelegt ist, die nicht nur zweidimensionale Bildkoordinaten aus der Laufzeitmessung der das Bildes erzeugenden Signalwellen (43) bestimmt, sondern auch die räumliche Koordinate, und ein dreidimensionales Bild (44) aus den zweidimensionalen Bildkoordinaten und der räumlichen Koordinate aufbaut.

11. Landwirtschaftliche Arbeitsmaschine, insbesondere ein Futtermittelernter, mit wenigstens einem Auswurfstutzen nach Anspruch 10,
**dadurch gekennzeichnet, dass**
die Füllhöhe (51), die Positionen der Seitenwände (34), die Höhe der Seitenwände (34), die Höhe des Sammelbehälters (25) und/oder des Transportfahrzeugs (6) über dem Boden, der Typ des Sammelbehälters (25), die Position der Dachöffnung des Sammelbehälters (25) und das leere Volumen (50) des Sammelbehälters (25) des Transportfahrzeugs (6) aus der dreidimensionalen Bildinformation (44) abgeleitet werden.

12. Landwirtschaftliche Arbeitsmaschine, insbesondere ein Futtermittelernter, mit wenigstens einem Auswurfstutzen nach Anspruch 11,
**dadurch gekennzeichnet, dass**
die Füllhöhenhorizonte (52) aus den berechneten, örtlich aufgelösten Füllhöhen (51) bestimmt werden und dass die Ladebedingungen (53) unter Berücksichtigung der berechneten Seitenwandhöhen (34) bestimmt werden.

13. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
ein Versatz des Auftreffbereichs (69), welcher durch störende Faktoren verursacht ist, erfasst wird, wobei die Positionssteuerung des Auswurfstutzens (4) und/oder des Transportfahrzeugs (6) und/oder der landwirtschaftlichen Arbeitsmaschine (1) so beeinflusst wird, dass der tatsächliche Auftreffbereich (69) der Position des Auftreffbereichs (69), welche in der Signal verarbeitenden Vorrichtung (22) bestimmt und/oder berechnet wird, entspricht.

14. Landwirtschaftliche Arbeitsmaschine, insbesondere ein Futtermittelernter, mit wenigstens einem Auswurfstutzen nach Anspruch 13,
**dadurch gekennzeichnet, dass**
der Störfaktor die Windgeschwindigkeit (v), die Beschleunigung und/oder die Geschwindigkeit des Erntegutstroms, die Anhebebewegung des Auswurfstutzens (4) beim Zusammenstoß zwischen Hindernissen und der landwirtschaftlichen Arbeitsmaschine (1) oder eine Kombination davon ist.

15. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die elektro-optische Vorrichtung (18) stromabwärts zum Auswurfstutzen (4) in der Richtung des Produktausstoßes (20) angeordnet ist und mittels einer Tragerahmenstruktur (19) mit dem Auswurfstutzen (4) gekoppelt ist oder die elektro-optische Vorrichtung (18) direkt an der Ausstoßkappe (14) des Auswurfstutzens (4) angeordnet ist.

16. Landwirtschaftliche Arbeitsmaschine, insbesondere ein Futtermittelernter, mit wenigstens einem Auswurfstutzen nach Anspruch 15,
**dadurch gekennzeichnet, dass**
der Auswurfstutzen (4) an seinem Auslassende eine Ausstoßkappe (14) aufweist, welche quer zur Ausstoßrichtung (20) des Erntegutstroms (7) gedreht werden kann, wobei die Bewegung der Tragerahmenstruktur (19) mit der Bewegung (15) der Ausstoßkappe (14) gekoppelt ist.

17. Landwirtschaftliche Arbeitsmaschine, insbesondere ein Futtermittelernter, mit wenigstens einem Auswurfstutzen nach Anspruch 9,
**dadurch gekennzeichnet, dass**
die elektro-optische Vorrichtung (18) als Panoramabildkamera, als ein Infrarot- oder Laserscanner oder als Stereokamera ausgelegt ist.

18. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die elektro-optischen Vorrichtungen (18) dem Transportfahrzeug (6) und/oder dem Sammelbehälter (25) zugeordnet sind, wobei die Signal verarbeitende Vorrichtung (22) die Informationssignale (W) von diesen elektro-optischen Vorrichtungen (18) berücksichtigt, während sie die Informationssignale (X-Z) der weiteren elektro-optischen Vorrichtungen (18) analysiert.

19. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die Signal verarbeitende Vorrichtung (22) überwacht wird und dass kritische Zustände, welche die Ableitung von Bildinformation beeinträchtigen, signalisiert werden.

20. Landwirtschaftliche Arbeitsmaschine, insbesondere ein Futtermittelernter, mit wenigstens einem Auswurfstutzen nach Anspruch 19,
**dadurch gekennzeichnet, dass**
das Signalisieren durch Anzeigen einer Videosequenz (64) auf einem Monitor (63), welcher der Bedienperson der landwirtschaftlichen Arbeitsmaschine (1) und/oder des Transportfahrzeugs (6) zugänglich ist, stattfindet.

21. Landwirtschaftliche Arbeitsmaschine, insbesondere ein Futtermittelernter, mit wenigstens einem Auswurfstutzen nach Anspruch 20,
**dadurch gekennzeichnet, dass**
charakteristische Linien (66) und/oder Orientierungspunkte (72) in der Videosequenz (64) visualisiert werden.

22. Landwirtschaftliche Arbeitsmaschine, insbesondere ein Futtermittelernter, mit wenigstens einem Auswurfstutzen nach Anspruch 21,
**dadurch gekennzeichnet, dass**
charakteristische Linien (66) und/oder Orientierungspunkte (72) wenigstens die oberen Seitenwandkanten (67) simulieren.

23. Landwirtschaftliche Arbeitsmaschine, insbesondere ein Futtermittelernter, mit wenigstens einem Auswurfstutzen nach einem der Ansprüche 20 und 21, **dadurch gekennzeichnet, dass**
die oberen Seitenwandkanten (67), welche durch die charakteristische Linien (66) und/oder die Orientierungspunkte (72) definiert sind, die Einlassöffnung (68) des Sammelbehälters (25) definieren, wobei ein Koordinatensystem (70) der Einlassöffnung (68) zugeordnet ist.

24. Landwirtschaftliche Arbeitsmaschine, insbesondere ein Futtermittelernter, mit wenigstens einem Auswurfstutzen nach Anspruch 23,
**dadurch gekennzeichnet, dass**
das Koordinatensystem (70) einen charakteristischen Parameter (30) des Transportfahrzeugs (6) ausbildet und dass die Positionsveränderung des Auswurfstutzens (4) entlang dem Koordinatensystem (70) ausgeführt wird.

25. Landwirtschaftliche Arbeitsmaschine, insbesondere ein Futtermittelernter, mit wenigstens einem Auswurfstutzen nach Anspruch 6,
**dadurch gekennzeichnet, dass**
die Positionssteuerungen des Auswurfstutzens (4), der landwirtschaftlichen Arbeitsmaschine (1) und des Transportfahrzeugs (6) eingesetzt werden, wenn das Umfahren (37, 38) von Hindernisse (36) erforderlich ist.

26. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
Muster (56) von unterschiedlichen Sammelbehältertypen in der Signal verarbeitenden Vorrichtung (22) gespeichert sind, wobei das Muster (56) des Sammelbehälters (25), welches durch die elektro-optische Vorrichtung (18) und/oder die Signal verarbeitende Vorrichtung (22) erzeugt wird, mit den gespeicherten Mustern (56) verglichen wird und dass der richtige Trailertyp erfasst und ausgewählt wird.

27. Landwirtschaftliche Arbeitsmaschine, insbesondere ein Futtermittelernter, mit wenigstens einem Auswurfstutzen nach Anspruch 5 und/oder 26,
**dadurch gekennzeichnet, dass**
die Muster (55-57) als 3D-Muster und/oder Konturmuster und/oder Texturmuster und/oder Farbmuster strukturiert sind.

28. Landwirtschaftliche Arbeitsmaschine, insbesondere ein Futtermittelernter, mit wenigstens einem Auswurfstutzen nach einem der vorangehenden Ansprüche,
**dadurch gekennzeichnet, dass**
die elektro-optische Vorrichtung (18) aus wenigstens einer Kamera (41) und wenigstens einer Lichtquelle (74) aufgebaut ist, welche den Erntegutstrom und/oder den Sammelbehälter, welche durch die Kamera (41) erfasst werden, beleuchtet.

29. Landwirtschaftliche Arbeitsmaschine, insbesondere ein Futtermittelernter, mit wenigstens einem Auswurfstutzen nach Anspruch 28,
**dadurch gekennzeichnet, dass**
die wenigstens eine Lichtquelle (74) am Auswurfstutzen (4) des Futtermittelernters (2) und/oder am Chassis des Futtermittelernters (2) und/oder am Transportfahrzeug (6) angebracht ist.

30. Landwirtschaftliche Arbeitsmaschine, insbesondere ein Futtermittelernter, mit wenigstens einem Auswurfstutzen nach Anspruch 28 und/oder Anspruch 29,
**dadurch gekennzeichnet, dass**
die Beleuchtungsrichtung der wenigstens einen Lichtquelle (74) sich von der Blickrichtung der Kamera (41) unterscheidet.

31. Landwirtschaftliche Arbeitsmaschine, insbesondere ein Futtermittelernter, mit wenigstens einem Auswurfstutzen nach Anspruch 30,
**dadurch gekennzeichnet, dass**
die Beleuchtungsfläche (75) der wenigstens einen Lichtquelle (74) den Erntegutstrom quer und/oder in einer entgegengesetzten Richtung zur Blickrichtung der Kamera (41) beleuchtet.

## Revendications

1. Machine de travail agricole, en particulier moissonneuse de fourrage, ayant au moins un bec verseur pour transporter une récolte reçue et traitée vers un véhicule de transport, un dispositif électro-optique étant fourni pour la commande de direction du bec verseur au moins pendant le processus de transport vers le véhicule de transport,
**caractérisée en ce que**
le dispositif électro-optique (18) détecte des paramètres caractéristiques (30) du bec verseur (4) et des paramètres caractéristiques (30) du véhicule de transport (6) et/ou de la machine de travail agricole (1).

2. Machine de travail agricole, en particulier moissonneuse de fourrage, ayant au moins un bec verseur selon la revendication 1,
**caractérisée en ce que**
les paramètres caractéristiques (30) sont des paramètres cinématiques et/ou géométriques du bec verseur (4), du véhicule de transport (6) et de la machine de travail agricole (1).

3. Machine de travail agricole, en particulier moissonneuse de fourrage, ayant au moins un bec verseur selon la revendication 2,
**caractérisée en ce que**
les paramètres caractéristiques peuvent être le niveau de remplissage (30a, 51) du véhicule de transport (6), le taux de remplissage du véhicule de transport (6), un motif de niveau de remplissage (30b, 54) représentant le niveau de remplissage du véhicule de transport (6), la détection de la position (30c) des parois latérales (34) du véhicule de transport (6, 25), la vitesse de déplacement (30b) et/ou l'angle de direction (30) du véhicule de transport (6), la vitesse de déplacement (30d) et/ou l'angle de direction (30g) de la machine de travail agricole (1), la longueur de coupe (30h) et la qualité de récolte (30i) de la récolte (7) transportée à partir du bec verseur (4).

4. Machine de travail agricole, en particulier moissonneuse de fourrage, ayant au moins un bec verseur selon l'une quelconque des revendications précédentes,
**caractérisée en ce que**
la machine de travail agricole (1) et/ou le véhicule de transport (6) produisent des paramètres caractéristiques (31, 32), ces paramètres caractéristiques (31, 32) pouvant être au moins la vitesse de déplacement et/ou l'angle de direction du véhicule de transport (6), la vitesse de déplacement et/ou l'angle de direction de la machine de travail agricole (1) et des données de position de base GPS de la machine de travail agricole (1) et/ou du véhicule de transport (6) et leur position relative l'un par rapport à l'autre.

5. Machine de travail agricole, en particulier moissonneuse de fourrage, ayant au moins un bec verseur selon la revendication 3,
**caractérisée en ce que**
le motif de niveau de remplissage (54) comprend l'identification de motifs (55-57), les motifs (55-57) comprenant un motif (55) pour la récolte (7), un motif (56) pour le conteneur de stockage (25) et un motif (57) pour la zone environnante (29) du conteneur de stockage (25) ou une combinaison de ceux-ci.

6. Machine de travail agricole, en particulier moissonneuse de fourrage, ayant au moins un bec verseur selon l'une des revendications précédentes, **caractérisée en ce que**
le dispositif électro-optique (18) est relié à un dispositif de traitement de signal (22) et le dispositif de traitement de signal (22) est conçu de sorte qu'il traite en tant que signaux d'entrée (A-C)les signaux d'information (Z) produits par le dispositif électro-optique (18), des signaux d'information (X, W) produits par le véhicule de transport (6), et des signaux d'information (Y, W) produits par la machine de travail agricole (1), ou une combinaison de ceux-ci, en signaux émis, et **en ce que** les signaux émis (D) forment des signaux de commande de position (E-G) pour la commande de position du bec verseur (4) et/ou du véhicule de transport (6) et/ou de la machine de travail agricole (1).

7. Machine de travail agricole, en particulier moissonneuse de fourrage, ayant au moins un bec verseur selon la revendication 6,
**caractérisée en ce que**
les relations de variation de position (40) sont mémorisées dans le dispositif de traitement de signal (22), et **en ce que** le dispositif de traitement de signal (22) produit les signaux de commande de position (E-G) du bec verseur (4) et/ou du véhicule de transport (6) et/ou de la machine de travail agricole (1) en fonction d'une ou plusieurs de ces relations de variation de position (40).

8. Machine de travail agricole, en particulier moissonneuse de fourrage, ayant au moins un bec verseur selon l'une des revendications précédentes,
**caractérisée en ce que**
les signaux de commande de position (F, G) commandent la direction et/ou la vitesse de déplacement du véhicule de transport (6) et/ou de la machine de travail agricole (1).

9. Machine de travail agricole, en particulier moissonneuse de fourrage, ayant au moins un bec verseur, selon l'une des revendications précédentes,
**caractérisée en ce que**
le dispositif électro-optique (18) est conçu comme une caméra (41).

10. Machine de travail agricole, en particulier moissonneuse de fourrage, ayant au moins un bec verseur selon la revendication 9,
**caractérisée en ce que**
la caméra (41) est conçue sous la forme d'une caméra 3D Photonic Mixer Device (42) de la technique antérieure, qui détermine non seulement des coordonnées d'image bidimensionnelles à partir de la mesure du temps d'écoulement des ondes de signal de production d'image (43), mais aussi des coordonnées spatiales, et produit une image tridimensionnelle (44) à partir des coordonnées d'image bidimensionnelles et de la coordonnée spatiale.

11. Machine de travail agricole, en particulier moissonneuse de fourrage, ayant au moins un bec verseur selon la revendication 10,
**caractérisée en ce que**
la hauteur de remplissage (51), les positions des parois latérales (34), la hauteur des parois latérales (34), la hauteur du conteneur de stockage (25) et/ou du véhicule de transport (6) au-dessus du sol, le type de conteneur de stockage (25), la position de l'ouverture du toit du conteneur de stockage (25) et le volume à vide (50) du conteneur de stockage (25) du véhicule de transport (6) sont dérivés des informations d'image tridimensionnelles (44).

12. Machine de travail agricole, en particulier moissonneuse de fourrage, ayant au moins un bec verseur selon la revendication 11,
**caractérisée en ce que**
des horizons de hauteur de remplissage (52) sont déterminées à partir des hauteurs de remplissage résolues localement calculées (51) et **en ce que** des conditions de chargement (53) sont déterminées en prenant en considération les hauteurs de paroi latérale calculées (34).

13. Machine de travail agricole, en particulier moissonneuse de fourrage, ayant au moins un bec verseur selon l'une des revendications précédentes,
**caractérisée en ce que**
un déplacement de la zone d'impact (69) provoqué par des facteurs perturbants est détecté, la commande de position du bec verseur (4) et/ou du véhicule de transport (6) et/ou de la machine de travail agricole (1) est influencée de sorte que la zone d'impact réelle (69) correspond à la position de la zone d'impact (69) déterminée et/ou prévue dans le dispositif de traitement de signal (22).

14. Machine de travail agricole, en particulier moissonneuse de fourrage, ayant au moins un bec verseur selon la revendication 13,
**caractérisée en ce que**
le facteur perturbant est la vitesse du vent (v), l'accélération et/ou la vitesse du flux de récolte, le mouvement de levage du bec verseur (4) par collision entre des obstacles et la machine de travail agricole (1) ou une combinaison de ceux-ci.

15. Machine de travail agricole, en particulier moissonneuse de fourrage, ayant au moins un bec verseur selon l'une des revendications précédentes,
**caractérisée en ce que**
le dispositif électro-optique (18) est agencé en aval du bec verseur (4) dans la direction de l'évacuation de produit (20), et est couplé par l'intermédiaire d'une structure de châssis de support (19) au bec verseur (4) ou le dispositif électro-optique (18) est agencé directement sur le capuchon de décharge (14) du bec verseur (4).

16. Machine de travail agricole, en particulier moissonneuse de fourrage, ayant au moins un bec verseur selon la revendication 15,
**caractérisée en ce que**
le bec verseur (4) comprend à son extrémité côté sortie un capuchon d'évacuation (14) qui peut pivoter transversalement par rapport à la direction d'évacuation (20) de l'écoulement de récolte (7), le mouvement de la structure de châssis de support (19) étant relié au mouvement (15) du capuchon d'évacuation (14.

17. Machine de travail agricole, en particulier moissonneuse de fourrage, ayant au moins un bec verseur selon la revendication 9,
**caractérisée en ce que**
le dispositif électro-optique (18) est conçu sous la forme d'une caméra d'images panoramiques, d'un scanneur à infrarouge ou laser ou d'une caméra stéréo.

18. Machine de travail agricole, en particulier moissonneuse de fourrage, ayant au moins un bec verseur selon l'une des revendications précédentes,
**caractérisée en ce que**
des dispositifs électro-optiques (18) sont assignés au véhicule de transport (6) et/ou au conteneur de stockage (25), le dispositif de traitement de signal (22) prenant en compte les signaux d'information (W) provenant de ces dispositifs électro-optiques (18) lors de l'analyse des signaux d'information (X-Z) de l'autre dispositif électro-optique (18.

19. Machine de travail agricole, en particulier moissonneuse de fourrage, ayant au moins un bec verseur selon l'une des revendications précédentes,
**caractérisée en ce que**
l'analyse d'image du dispositif de traitement de signal (22) est contrôlée et **en ce que** des conditions critiques qui gênent la dérivation de la formation d'image sont signalées.

20. Machine de travail agricole, en particulier moissonneuse de fourrage, ayant au moins un bec verseur selon la revendication 19,
**caractérisée en ce que**
le traitement de signal a lieu par mise en vis-à-vis d'une séquence vidéo (64) dans un moniteur (63) accessible pour l'opérateur de la machine de travail agricole (1) et/ou du véhicule de transport (6).

21. Machine de travail agricole, en particulier moissonneuse de fourrage, ayant au moins un bec verseur selon la revendication 20,
**caractérisée en ce que**
des lignes caractéristiques (66) et/ou des points d'orientation (72) sont visualisés dans la séquence vidéo (64).

22. Machine de travail agricole, en particulier moissonneuse de fourrage, ayant au moins un bec verseur selon la revendication 21,
**caractérisée en ce que**
les lignes caractéristiques (66) et/ou les points d'orientation (72) simulent au moins les bords de paroi latérale supérieure (67).

23. Machine de travail agricole, en particulier moissonneuse de fourrage, ayant au moins un bec verseur selon l'une des revendications 20 et 21,
**caractérisée en ce que**
les bords de paroi latérale supérieure (67) définis par les lignes caractéristiques (66) et/ou les points d'orientation (72) définissent l'ouverture d'entrée (68) du conteneur de stockage (25), le système de coordonnées (70) étant assigné à l'ouverture d'entrée (68).

24. Machine de travail agricole, en particulier moissonneuse de fourrage, ayant au moins un bec verseur selon la revendication 23,
**caractérisée en ce que**
le système de coordonnées (70) forme un paramètre caractéristique (30) du véhicule de transport (6), et **en ce que** la variation de position du bec verseur (4) est effectuée le long du système de coordonnées (70).

25. Machine de travail agricole, en particulier moissonneuse de fourrage, ayant au moins un bec verseur selon la revendication 6,
**caractérisée en ce que**
la commande de position du bec verseur (4) de la machine de travail agricole (1) et du véhicule de transport (6) est utilisée lors d'un contournement (37,38) d'obstacles (36).

26. Machine de travail agricole, en particulier moissonneuse de fourrage, ayant au moins un bec verseur selon l'une des revendications précédentes,
**caractérisée en ce que**
des motifs (56) de différents types de conteneur de stockage sont mémorisés dans le dispositif de traitement de signal (22), le motif (56) du conteneur de stockage (25) produit par le dispositif électro-optique (18) et/ou le dispositif de traitement de signal (22) étant comparé avec les motifs mémorisés (56) et **en ce que** le type de remorque adapté est détecté et sélectionné.

27. Machine de travail agricole, en particulier moissonneuse de fourrage, ayant au moins un bec verseur selon la revendication 5 et/ou 26,
**caractérisée en ce que**
les motifs (55-57) sont structurés sous la forme de motifs 3D et/ou de motifs de forme et/ou de motifs de texture et/ou de motifs de couleur.

28. Machine de travail agricole, en particulier moissonneuse de fourrage, ayant au moins un bec verseur selon l'une des revendications précédentes,
**caractérisée en ce que**
le dispositif électro-optique (18) est constitué d'au moins une caméra (41) et d'au moins une source de lumière (74), éclairant le flux de récolte et/ou le conteneur de stockage détecté par la caméra (41).

29. Machine de travail agricole, en particulier moissonneuse de fourrage, ayant au moins un bec verseur selon la revendication 28,
**caractérisée en ce que**
la au moins une source de lumière (74) est reliée au bec verseur (4) de la moissonneuse de fourrage (2) et/ou au châssis de la moissonneuse de fourrage (2) et/ou du véhicule de transport (6).

30. Machine de travail agricole, en particulier moissonneuse de fourrage, ayant au moins un bec verseur selon la revendication 28 et/ou la revendication 29,
**caractérisée en ce que**
la direction d'éclairage de la au moins une source de lumière (74) est différente de la direction de visée de la caméra (41).

31. Machine de travail agricole, en particulier moissonneuse de fourrage, ayant au moins un bec verseur selon la revendication 30,
**caractérisée en ce que**
la zone d'éclairage (75) de la au moins une source de lumière (74) éclaire le flux de récolte transversalement et/ou dans une direction opposée à la direction de visée de la caméra (41).
